**Europäisches Patentamt**

**European Patent Office**

**Office européen des brevets**

(19)

(11) Veröffentlichungsnummer: **0 027 850
B1**

(12) **EUROPÄISCHE PATENTSCHRIFT**

(45) Veröffentlichungstag der Patentschrift:
23.02.83

(51) Int. Cl.³: **C 08 F 246/00,** C 08 F 220/34,
C 09 D 7/00

(21) Anmeldenummer: 80103686.4

(22) Anmeldetag: 28.06.80

(54) **Emulsionspolymerisat mit Verdickungswirkung im sauren Bereich und seine Verwendung.**

(30) Priorität: 23.08.79 DE 2934086

(43) Veröffentlichungstag der Anmeldung:
06.05.81 Patentblatt 81/18

(45) Bekanntmachung des Hinweises auf die Patenterteilung:
23.02.83 Patentblatt 83/8

(84) Benannte Vertragsstaaten:
BE DE FR GB NL SE

(56) Entgegenhaltungen:
GB—A—1 002 231

**Die Akte enthält technische Angaben, die nach dem
Eingang der Anmeldung eingereicht wurden und die
nicht in dieser Patentschrift enthalten sind.**

(73) Patentinhaber: Röhm GmbH, Kirschenallee
Postfach 4242, D-6100 Darmstadt 1 (DE)

(72) Erfinder: Fink, Herbert, Dr., Berliner Strasse 24,
D-6101 Bickenbach (DE)
Erfinder: Hübner, Klaus, Dr., Leipziger Strasse 9,
D-6105 Ober-Ramstadt-Eiche (DE)
Erfinder: Markert, Gerhard, Dr., Leipziger Strasse 25,
D-6105 Ober-Ramstadt-Eiche (DE)
Erfinder: Sütterlin, Norbert, Dr., Am Horeth 23,
D-6105 Ober-Ramstadt (DE)

Emulsionspolymerisat mit Verdickungswirkung im sauren Bereich und seine Verwendung

Die Erfindung betrifft Emulsionspolymerisate mit Verdickungswirkung für wässerige Systeme. Kennzeichnend für diese Art von Emulsionspolymerisaten ist ein Gehalt an salzbildenden Gruppen und die niedrige Viskosität der daraus gebildeten wässerigen Dispersionen im neutralen Bereich. Führt man dem Stand der Technik gemäss Carboxylgruppen durch Zugabe einer Base in den Salzzustand über, so geht die Dispersion in den Mikrosolzustand über, wobei sie ihr milchiges Aussehen verliert, schwach trüb bis klar durchsichtig wird und die Viskosität um mehrere Grössenordnungen ansteigt.

Bekannte Beispiele derartiger Emulsionspolymerisate mit Verdickungswirkung im alkalischen Bereich sind Mischpolymerisate der Acrylsäure mit niederen Estern der Acryl- und gegebenenfalls Methacrylsäure. H. Wesslau hat in „Makromolekulare Chemie" 69 (1963), S. 220 bis 240, die Abhängigkeit der Verdickungswirkung derartiger Emulsionspolymerisate von verschiedenen Faktoren beschrieben, von denen die Erweichungstemperatur und die Hydrophilie des Polymerisats die wichtigsten sind. Die Hydrophilie wird nicht allein durch den Gehalt an Acrylsäureeinheiten bestimmt, sondern im wesentlichen Masse durch die Hydrophilie der damit mischpolymerisierten Comonomeren beeinflusst. Während Emulsionspolymerisate aus 5% Acrylsäure und 95% Äthylacrylat stark verdickbar sind, verdicken Emulsionspolymerisate, die anstelle des Äthylacrylats die gleiche Menge n-Butylacrylat enthalten, nur schwach und solche mit Styrol statt Äthylacrylat gar nicht. Die geringe bzw. fehlende Verdickbarkeit wird im ersten Fall auf zu niedrige Hydrophilie der Comonomeren, im zweiten Fall zusätzlich auf die zu hohe Erweichungstemperatur des Polymerisats zurückgeführt.

Emulsionspolymerisate mit Verdickungswirkung werden zur Erhöhung der Viskosität wässeriger Systeme eingesetzt. Dank ihrer niedrigen Viskosität können Dispersionen dieser Polymerisate selbst bei Feststoffgehalten bis 60 Gew.% durch einfaches Verrühren in niedrig-viskosen wässerigen Systemen, beispielsweise für Beschichtungszwecke eingesetzten Kunststoffdispersionen, gleichmässig verteilt werden. Durch Zugabe einer Base kann innerhalb kürzester Zeit die Viskosität des wässerigen Systems auf den gewünschten Wert eingestellt werden. Demgegenüber ist die Verdickung von wässerigen Systemen mit gelösten oder pulverförmigen hochmolekularen Verdickungsmitteln, wie z.B. Zelluloseäthern, mühsam und zeitraubend.

Die bekannten Emulsionspolymerisate mit Verdickungswirkung haben nur im alkalischen Bereich eine Verdickungswirkung. Für saure wässerige Systeme sind entsprechende Emulsionspolymerisate mit Verdickungswirkung bisher nicht bekannt, aber zur Viskositätseinstellung erwünscht. Beispielsweise werden selbstvernetzende Kunststoffdispersionen in der Regel im sauren Milieu angewandt, da ihre Vernetzung sauer katalysiert wird. Emulsionspolymerisate, die analog den bekannten Mischpolymerisaten der Acrylsäure aufgebaut sind, aber an deren Stelle Aminoalkylester der Acryl- oder Methacrylsäure enthalten, sind zwar im neutralen Bereich niedrigviskos und verdicken beim Ansäuern. Im Gegensatz zu den acrylsäurehaltigen Emulsionspolymerisaten tritt aber bereits beim Stehen der neutralen oder schwachbasischen Dispersion von selbst eine Verdickung ein, wodurch der entscheidende Vorteil der Emulsionspolymerisate mit Verdickungswirkung, nämlich die niedrige Viskosität vor der Überführung in den Salzzustand, verloren geht. Die Aufgabe, Emulsionspolymerisate mit Verdickungswirkung im sauren Bereich und mit ausreichender Beständigkeit des niedrigviskosen Zustands herzustellen, erwies sich mit den gebräuchlichen Aminoalkylestern der Acryl- oder Methacrylsäure als nicht lösbar.

Die carboxylgruppenhaltigen Verdickungsmittel haben, neben der Beschränkung auf die Anwendung in alkalischen Systemen den weiteren Nachteil, dass sie verhältnismässig harte Filme bilden und die Filmhärte von damit verdickten weichen Kunststoffdispersionen deutlich erhöhen.

Polymere Verdickungsmittel mit einer vom pH-Wert unabhängigen Verdickungswirkung sind in der DE-PS Nr. 1037407 beschrieben. Sie enthalten Einheiten von quaternierten Aminoalkylestern polymerisierbarer Carbonsäuren. Wegen ihrer Quellbarkeit im gesamten pH-Bereich lassen sich daraus keine verdickbaren, niedrigviskosen Dispersionen herstellen.

Es wurde nun gefunden, dass die Emulsionspolymerisate gemäss dem Hauptanspruch, die als salzbildende Komponente Einheiten eines 3-Dialkylamino-2,2-dimethylpropylesters einer ungesättigten polymerisierbaren Carbonsäure enthalten, nicht nur eine ausgezeichnete Verdickungswirkung im sauren Bereich zeigen, sondern dass ihre wässerigen Dispersionen auch vor der Überführung in den Salzzustand bei längerer Lagerung niedrigviskos bleiben. Darüber hinaus lassen sie eine weiche Einstellung zu, wodurch die Filmhärte verdickter weicher Dispersionen praktisch nicht verändert wird.

Der überraschende Unterschied zwischen den erfindungsgemässen Emulsionspolymerisaten und solchen, die als salzbildende Gruppen Einheiten des Dimethylaminoäthylmethacrylats enthalten, wird in der nachfolgenden Tabelle mit Viskositätswerten der wässerigen Dispersion nach verschieden langen Lagerzeiten bei 20°C veranschaulicht. Die beiden miteinander verglichenen Emulsionspolymerisate sind aus 30 Gew.% Aminoalkylester der Methacrylsäure, 40 Gew.% Methylacrylat und 30 Gew.% Äthylacrylat aufgebaut und haben einen Feststoffgehalt von 40 Gew.% und einen pH-Wert von 7,0. Der Aminoalkylester des Emulsionspolymerisats I leitet sich vom Dimethylaminoäthanol ab, während das

erfindungsgemässe Emulsionspolymerisat II einen Methacrylester des 3-Dimethylamino-2,2-dimethylpropanols-1 enthält.

Tabelle 1 .

| Standzeit bei 20°C | Viskosität der 40%igen Dispersionen (mPa s) | |
|---|---|---|
| | I | II |
| 0 d<br>2 d<br>30 d | 11 400<br>Paste *)<br>Paste *) | 10<br>10<br>10 |

*) Viskosität nicht mehr messbar.

Die Verdickungswirkung der gleichen Dispersion nach dem Verdünnen auf einen Feststoffgehalt von 5% und Ansäuern mittels Phosphorsäure auf pH 4,5 geht aus folgender Tabelle hervor:

Tabelle 2

| | Viskosität (mPa s) | |
|---|---|---|
| | I | II |
| bei pH 7,0<br>bei pH 4,5 | <10<br>30 000 | <10<br>75 000 |

Emulsionspolymerisate von Dialkylamino-2,2-dimethylpropylestern von ungesättigten polymerisierbaren Carbonsäuren waren bisher nicht bekannt. Es war zwar schon aus der US-PS Nr. 3188228 (Beispiel 15B) bekannt, Pfropfpolymerisate des 3-Dimethylamino-2,2-dimethylpropylacrylats herzustellen, jedoch konnten daraus keine Rückschlüsse auf die überraschenden Eigenschaften der Emulsionspolymerisate dieser Monomeren gezogen werden.

Die 3-Dialkylamino-2,2-dimethylpropylester von ungesättigten polymerisierbaren Carbonsäuren mit 1 bis 4 Kohlenstoffatomen in den Alkylresten sind nur geringfügig wasserlöslich und können in an sich bekannter Weise in wässeriger Emulsion polymerisiert werden. Die Ester der Acryl- und Methacrylsäure sind besonders bevorzugt, insbesondere die mit einer Dimethylaminogruppe.

Vorzugsweise sind die erfindungsgemässen Emulsionspolymerisate nicht allein aus den erwähnten Aminoalkylestern aufgebaut, sondern enthalten weitere Comonomere. Wenigstens 90 Gew.% des dem Emulsionspolymerisat zugrundeliegenden Monomerengemisches bestehen aus einem Gemisch der Aminoalkylester mit einem oder mehreren in Wasser höchstens begrenzt löslichen Comonomeren, wobei die ersteren mindestens 5 und die letzteren höchstens 95 Gew.% dieses Gemisches ausmachen. Als begrenzt wasserlöslich werden alle Monomeren angesehen, die eine Wasserlöslichkeit von höchstens 10% bei 20°C aufweisen. Für die Auswahl dieser Comonomeren gelten die Gesichtspunkte, die H. Wesslau in der eingangs zitierten Veröffentlichung genannt hat. Je grösser der Anteil dieser Comonomeren an dem Emulsionspolymerisat ist, um so stärker beeinflussen sie dessen Erweichungstemperatur. Die Verdickungswirkung besteht nur bei Temperaturen oberhalb der Erweichungstemperatur. Deshalb muss die Monomerenzusammensetzung stets so gewählt werden, dass die Erweichungstemperatur niedriger liegt als die vorgesehene Anwendungstemperatur des Emulsionspolymerisats. Wenn eine Verdickungswirkung erst bei der Siedehitze eines wässerigen Systems erzielt werden soll, kann die Erweichungstemperatur wenig unter 100°C liegen. Soll dagegen schon bei Raumtemperatur Verdickungswirkung gegeben sein, so ist eine Erweichungstemperatur unter 20°C erforderlich. Die Erweichungstemperatur wird an einem aus dem Emulsionspolymerisat erzeugten Film nach dem Torsionsschwingungsversuch gemäss DIN 53445 ermittelt und durch den $T_{\lambda max.}$-Wert (in °C oder K) ausgedrückt.

Monomere, die eine niedrige Erweichungstemperatur des daraus hergestellten Emulsionspolymerisats bewirken, sind die Ester der Acrylsäure, wie z.B. Äthylacrylat, Butylacrylat oder 2-Äthylhexylacrylat, die höheren Ester der Methacrylsäure, wie n-Butylmethacrylat, Hexylmethacrylat, 2-Äthylhexylmethacrylat, Dodecylmethacrylat, Vinylester höherer Fettsäuren, wie Vinylbutyrat oder Vinylhexoat, oder Vinyläther, wie Methyl-, Äthyl- oder Butylvinyläther. Hohe Erweichungstemperaturen haben die Polymerisate der niederen Methacrylsäureester wie Methylmethacrylat, Äthylmethacrylat oder Isobutylmethacrylat, Styrol und seine Homologen sowie Vinylester niederer Carbonsäuren, wie Vinylacetat oder -propionat, und Acryl- oder Methacrylnitril. Durch ein geeignetes Mischungsverhältnis der genannten Monomeren aus beiden Gruppen lässt sich jede beliebige Erweichungstemperatur des Emulsionspolymerisats zwischen etwa −40° und 100°C einstellen.

Für eine hohe Verdickungswirkung ist es von Vorteil, wenn sich die am Aufbau des Emulsionspolymerisats beteiligten Monomeren in ihren Copolymerisationsparametern nicht stark unterscheiden. Dies trifft z.B. für die Ester der Acryl- und Methacrylsäure zu; die bevorzugten Emulsionspolymerisate gemäss der Erfindung enthalten daher als Monomerkomponenten a und b gemäss Hauptanspruch ausschliesslich Ester dieser Säuren.

Neben der Erweichungstemperatur ist die Hydrophilie des Emulsionspolymerisats von Bedeutung. Die Verdickungswirkung nimmt mit der Hydrophilie des Polymerisats zu, jedoch darf die Hydrophilie insgesamt nur so gross sein, dass das Polymerisat vor der Überführung in die Salzform wasserunlöslich ist, und die Bildung einer Dispersion mit milchig weissem Aussehen zulässt. Diese Voraussetzung ist bei allen Emulsionspolymerisaten erfüllt, die allein aus den Komponenten a und b aufgebaut sind. Die begrenzt wasserlöslichen Comonomeren der Komponente b unterscheiden sich voneinander durch den Grad ihrer Hydrophilie, die sich an der Wasserlöslichkeit ablesen lässt. Die Alkylester mit 1 bis 4, vorzugsweise 1 bis 3 Kohlenstoffatomen im Alkylrest, insbesondere Methyl- und Äthylester der Acryl- und Methacrylsäure, Vinylacetat und -propionat und niedere Vinyläther sind verhältnismässig hydrophil; ihre Wasserlöslichkeit liegt im Bereich von 0,5 bis 10% bei 20°C. Vorzugsweise bilden diese Monomeren wenigstens 20 Gew.% des Mischpolymerisats. Mit zunehmender Länge der Esteralkylreste nimmt die Hydrophilie ab, so dass höhere Ester sowie Styrol und seine Homologen vorzugsweise nur in verhältnismässig geringen Mengen am Aufbau der Polymerisate beteiligt sind.

Die Hydrophilie des Emulsionspolymerisats lässt sich gegebenenfalls durch untergeordnete Mengen, die nicht mehr als 10 Gew.% des Emulsionspolymerisats ausmachen, an wasserlöslichen Comonomeren erhöhen. Dazu gehören z.B. Hydroxyäthylacrylat oder -methacrylat, Acryl- oder Methacrylamid, Vinylpyrrolidon sowie Comonomere mit quartären Ammoniumgruppen, wie Methacryloxyäthyltrimethylammoniumchlorid. Comonomere mit Carboxyl- bzw. Carboxylatgruppen, wie Acryl- oder Methacrylsäure, Malein-, Fumar- oder Itakonsäure und deren wasserlösliche Salze, können sich in manchen Fällen nachteilig auf die Verdickungseigenschaften auswirken. Wenn ihre Anwesenheit aus besonderen Gründen erwünscht ist, beispielsweise zur Verbesserung der Stabilität, so muss im Einzelfall die Verträglichkeit mit dem Gesamtsystem überprüft werden.

Die Verdickungswirkung wird durch geringe Anteile von Vernetzungsmitteln gefördert. Darunter werden Monomere mit zwei oder mehr radikalisch polymerisierbaren Gruppen verstanden. Sie sind vorzugsweise in Mengen von 0,01 bis 0,5 Gew.% am Aufbau des Emulsionspolymerisats beteiligt. Beispiele für geeignete Vernetzungsmittel sind Äthylenglykoldiacrylat oder -dimethacrylat, 1,2-Propylenglykoldiacrylat oder -dimethacrylat, Butandiol-1,4-diacrylat oder -dimethacrylat, Methylenbisacrylamid oder -methacrylamid und Divinylbenzol.

Die erfindungsgemässen Polymerisate lassen sich nach den bekannten Methoden der wässerigen Emulsionspolymerisate herstellen. Als Emulgiermittel finden die üblichen Emulgatoren mit nichtionischen, kationischen, anionischen oder amphoteren Eigenschaften in den üblichen Mengen, die beispielsweise zwischen 0,01 und 10 Gew.% der wässerigen Phase liegen, Verwendung. Eine störende Wechselwirkung zwischen den basischen Estergruppen der Monomerkomponente a und anionischen Emulgatoren wird im allgemeinen nicht beobachtet, lässt sich aber gegebenenfalls durch die Verwendung von kationischen oder nichtionischen Emulgatoren oder deren Gemischen vermeiden. Als Beispiele für verwendbare Emulgatoren seien Natriumlaurylsulfat, Natriumdodecylbenzolsulfonat, Stearyldimethylbenzylammoniumchlorid, Kokosfettaminhydrochlorid, Oxäthylierungsprodukte von Alkylphenolen, Fettalkoholen oder Fettsäuren mit etwa 20-100 mol Äthylenoxideinheiten und Amphotenside genannt.

Man kann zur Herstellung der Emulsionspolymerisate die Monomeren in emulgierter Form mit den erforderlichen Hilfsstoffen vorlegen und die Polymerisation einleiten. Es wird jedoch im allgemeinen bevorzugt, die Monomeren als solche oder in Form einer wässerigen Emulsion im Laufe des Polymerisationsverfahrens allmählich zulaufen zu lassen. Zur Auslösung der Polymerisation werden die bekannten radikalbildenden Initiatoren in den gebräuchlichen Mengen verwendet. Wasserlösliche Azoinitiatoren, wie Alkalisalze der Azobiscyanvaleriansäure, sind besonders vorteilhaft. Bei Polymerisationstemperaturen, die beispielsweise zwischen 40 und 100°C liegen, lassen sich stabile Dispersionen mit Feststoffgehalten bis zu 60 Gew.% herstellen. Vorzugsweise liegt der Feststoffgehalt zwischen 30 und 60 Gew.%. Die Dispersionen haben ein milchig weisses Aussehen und reagieren neutral bis schwach basisch. Ihre Viskosität beträgt in typischen Fällen von 20 bis 5000 mPa/s.

In der Regel werden die wässerigen Dispersionen der erfindungsgemässen Emulsionspolymerisate als solche, gegebenenfalls nach Verdünnung mit Wasser, zur Verdickung von wässerigen Systemen eingesetzt. Die Verdickungswirkung besteht bei pH-Werten unter 7 und hat häufig im Bereich von pH 3,5 bis 5,5 ein Maximum. Die Verdickungswirkung ist nicht davon abhängig, ob man die Dispersion einem sauren wässerigen System zusetzt, oder ob man sie einem neutralen oder basischen wässerigen System zusetzt und dieses nachträglich ansäuert. Je nach der erforderlichen Verdickungswirkung werden die Emulsionspolymerisate in Mengen von 0,1 bis 10%, berechnet auf den Wassergehalt des zu verdickenden wässerigen Systems, angewendet.

Die erfindungsgemässen Emulsionspolymerisate lassen sich auch in Form eines feinteiligen Pulvers als Verdickungsmittel anwenden. Zu diesem Zweck wird die ursprünglich erzeugte wässerige Dispersion unter möglichst schonenden Bedingungen getrocknet. Dabei werden Temperaturen oberhalb der Erweichungstemperatur des Emulsionspolymerisats vermieden, so dass beim Trocknen die ursprünglichen Latexpartikeln erhalten bleiben oder allenfalls nur so lose aggregieren, dass sie sich beim Einrühren in Wasser redispergieren lassen. Als Trocknungsverfahren kommen vor allem die Gefriertrocknung und die Sprühtrocknung in Betracht. Das erhaltene pulverförmige Polymerisat kann ebenso wie die wässerige Dispersion zum Verdicken eingesetzt werden. Es empfiehlt sich, das Pulver dem neutralen oder schwach alkalischen wässerigen System zuzugeben und erst nach gleichmässiger Verteilung anzusäuern. Noch vorteilhafter ist es, das Pulver zuerst in Wasser zu redispergieren und in dieser Form weiterzuverarbeiten.

Die neuen Verdickungsmittel können in allen wässerigen Systemen angewendet werden, für deren Verarbeitung bei pH-Werten unter 7 eine erhöhte Viskosität erwünscht ist. Als wässerige Systeme werden neben reinem Wasser alle flüssigen Gemische angesehen, in denen Wasser oder ein überwiegend aus Wasser bestehendes Flüssigkeitsgemisch die flüssige Phase oder das Lösungsmittel bildet und in einem Anteil von nicht weniger als 20 Gew.% vorliegt. Neben Wasser kann die flüssige Phase beispielsweise niedere Alkohole oder Ketone, Glykole, Glykolhalbäther, Dimethylformamid oder andere wassermischbare organische Flüssigkeiten enthalten. Die wässerige Phase kann auch gelöste anorganische oder organische Stoffe, wie Salze oder Zucker, enthalten.

In Feststoffaufschlämmungen kann das Verdickungsmittel verwendet werden, um eine Entmischung zu vermeiden oder zu verzögern. Häufiger ist eine Verdickung für bestimmte Verarbeitungsverfahren erforderlich. In manchen Fällen genügt eine leichte Verdickung, etwa auf 100 bis 1000 mPa/s für wässerige Systeme, die beispielsweise durch Imprägnieren, Tränken oder Pflatschen verarbeitet werden. In anderen Fällen, z.B. für Streich- und Druckpasten, werden hochverdickte Systeme mit Viskositäten über 2500 mPa/s benötigt. Typische Viskositäten für derartige Pasten liegen bei 5000 bis 15 000 mPa/s.

Die zu verdickenden wässerigen Systeme können gelöste Polymerisate oder Bindemittel enthalten, wie Polyacrylsäure oder ihre Salze, Polyvinylalkohol, Polyacrylamid oder wasserlösliche Aminoplastharze. Überraschenderweise sind die Emulsionspolymerisate trotz ihres kationischen Charakters mit vielen polyanionischen Verbindungen verträglich.

Ein bevorzugtes Anwendungsgebiet für die Emulsionspolymerisate der Erfindung liegt in der Verdickung wässeriger Kunststoffdispersionen, insbesondere von solchen mit selbstvernetzenden Kunststoffen, die unter der Einwirkung saurer Katalysatoren vernetzen; diese enthalten beispielsweise N-Methylolamid- oder N-Methylolätheramidgruppen als vernetzungsfähige Gruppen. Es lassen sich alle Viskositätsstufen zwischen einer leichten Verdickung über cremeartige Systeme bis zu dicken Pasten herstellen, die zu Imprägnier- oder Beschichtungszwecken oder zur Herstellung von Schaumstoffen eingesetzt werden können.

In jedem Einzelfall sollte vor der Anwendung der erfindungsgemässen Verdickungsmittel deren Verträglichkeit mit den Bestandteilen des zu verdickenden wässerigen Systems geprüft werden. Wird das wässerige System erst nach Zugabe des Verdickungsmittels auf einen pH-Wert unter 7 eingestellt, so ist die Verträglichkeit beim Ausgangswert des pH-Wertes ebenso zu beachten wie beim Endwert.

Die erfindungsgemässen Verdickungsmittel sind von polykationischer Natur und infolgedessen zu Wechselwirkungen mit anionischen und besonders mit polyanionischen Verbindungen befähigt. Das gilt z.B. für anionische Tenside, gelöste oder dispergierte polyanionische Harze, Feststoffe mit anionischer Oberflächenladung usw. In ungünstigen Fällen kann eine Fällung, Ausflockung oder Koagulation eintreten. Sie lässt sich häufig vermeiden, wenn das zu verdickende System oder das Verdickungsmittel oder beide ein nichtionisches Tensid oder Schutzkolloid enthalten. Manchmal erweisen sich die verdickten Systeme aber auch ohne derartige Zusätze als beständig.

Die erfindungsgemässen Dispersionen mit einem unter Raumtemperatur liegenden $T_{\lambda max.}$-Wert bilden beim Trocknen — im Gegensatz zu den alkalisch verdickbaren Emulsionspolymerisaten — auch im verdickten Zustand weiche Filme und erhöhen nicht die Filmhärte der damit verdickten wässerigen Systeme. Sie können deshalb auch in solchen Fällen mit Vorteil eingesetzt werden, in denen das saure Milieu des verdickten Systems nicht aus anderen Gründen vorgegeben ist.

*Beispiele*

In einem mit Rückflusskühler, Rührer und Thermometer ausgerüsteten Polymerisationsgefäss werden bei 80°C 0,035 Gew.-Teile des Umsetzungsproduktes aus Isononylphenol und 100 mol Äthylenoxid (Emulgator A) sowie 0,03 Gew.-Teile 4,4'-Azobis-(4-cyanovaleriansäure)natriumsalz in 62 Gew.-Teilen Wasser gelöst. In diese Lösung gibt man innerhalb von 2 h bei 80°C eine zuvor hergestellte Emulsion aus den in der Tabelle jeweils angegebenen Monomerenanteilen sowie 0,075 Gew.-Teilen Glykoldimethacrylat, 93 Gew.-Teilen Wasser, 3 Gew.- Teilen Emulgator A und 0,01 Gew.-Teilen 4,4'- Azobis-(4-cyanovaleriansäure)natriumsalz. Der Ansatz wird noch 2 h bei 80°C gehalten und dann auf Raumtemperatur abgekühlt. Man erhält eine koagulatfreie Dispersion mit einem Feststoffgehalt von ca. 40%.

| Beispiel | Gew.-Teile | | | | Verdickung einer 5%igen wässrigen Verdünnung bei pH 4,5 mit $H_3PO_4$ (10%ig) (mPa/s) (Brookfield-Viskosimeter IV/6) |
|---|---|---|---|---|---|
| | MA | EA | BA | DAM | |
| 1 | | | 70 | 30 | 4 375 |
| 2 | | 35 | 35 | 30 | 68 500 |
| 3 | 40 | 30 | | 30 | 75 000 |
| 4 | | 70 | | 30 | 320 000 |
| 5 | 45 | 30 | | 25 | 18 500 |
| 6 | 40 | 25 | | 35 | 1 600 000 |

DAM = Methylacrylat    BA = Butylacrylat
EA = Äthylacrylat    DAM = 3-Dimethylamino-2,2-dimethylpropylmethacrylat

Zu 100 g einer 50%igen wässerigen Kunststoffdispersion mit einem pH-Wert 2,7, einer Viskosität von 80 mPa/s (Brookfield-Viskosimeter; Spindel I, 30 tr/min), deren Polymerisatphase aus 92 Gew.% Äthylacrylat, 5 Gew.% N-Methylolmethacrylamid und 3 Gew.% Methacrylamid zusammengesetzt ist, und die (bezogen auf das Gewicht der Wasserphase) 1,5 Gew.% eines anionischen Emulgators auf Basis eines oxäthylierten und sulfierten Alkylphenols enthält, werden 8 g der mit Wasser auf einem Trockengehalt von 20% verdünnten Verdickerdispersion gemäss Beispiel 3 der Tabelle und 2 g 10%ige Phosphorsäure unter Rühren zugesetzt. Die Viskosität steigt rasch an und erreicht nach 10 min den Wert von 62 000 mPa/S (Brookfield-Viskosimeter; Spindel IV, 6 tr/min, 25° C). Der pH-Wert der verdickten Dispersion beträgt 3,5.

## Patentansprüche

1. Emulsionspolymerisat mit Verdickungswirkung, aufgebaut aus:

a) 5 bis 100 Gew.% eines 3-Dialkylamino-2,2-dimethylpropylesters einer ungesättigten polymerisierbaren Carbonsäure, wobei die Alkylreste 1 bis 4 Kohlenstoffatome enthalten,

b) 0 bis 95 Gew.% eines in Wasser von 20° C höchstens zu 10 Gew.% löslichen Comonomeren, wobei a und b zusammengenommen wenigstens 90 Gew.% des Polymerisats bilden, und der gegebenenfalls verbleibende Teil aus wasserlöslichen Comonomeren aufgebaut ist und das Emulsionspolymerisat einen $T_{\lambda max.}$-Wert unter 100° C hat.

2. Emulsionspolymerisat nach Anspruch 1, dadurch gekennzeichnet, dass es in Form einer wässerigen Dispersion vorliegt.

3. Emulsionspolymerisat nach den Ansprüchen 1 und 2, dadurch gekennzeichnet, dass die Monomerkomponente b zu wenigstens 20 Gew.% (bezogen auf das Gewicht des Mischpolymerisats) aus wenigstens einem Alkylester der Acryl- oder/und Methacrylsäure mit 1 bis 4, vorzugsweise 1 bis 3 Kohlenstoffatomen im Alkylrest, Vinylacetat oder -propionat und/oder niederen Vinyläthern besteht.

4. Emulsionspolymerisat nach den Ansprüchen 1 bis 3, gekennzeichnet durch ein Molekulargewicht von mindestens 500 000.

5. Emulsionspolymerisat nach den Ansprüchen 1 bis 4, dadurch gekennzeichnet, dass an seinem Aufbau 0,01 bis 0,5 Gew.% eines Vernetzungsmittels beteiligt sind.

6. Verwendung eines Emulsionspolymerisats gemäss den Ansprüchen 1 bis 5, als Verdickungsmittel in einem wässerigen System mit einem pH-Wert unter 7.

7. Verwendung als Verdickungsmittel gemäss Anspruch 6, dadurch gekennzeichnet, dass das wässerige System eine Kunststoffdispersion ist.

8. Verwendung als Verdickungsmittel gemäss Anspruch 7, dadurch gekennzeichnet, dass die Kunststoffdispersion einen unter Einwirkung saurer Katalysatoren selbstvernetzenden Kunststoff enthält.

## Claims

1. Emulsion polymer with a thickening effect, synthesized from

(a) 5 to 100% by weight of a 3-dialkylamino-2,2-dimethylpropyl ester of an unsaturated polymerisable carboxylic acid, wherein the alkyl groups contain from 1 to 4 carbon atoms,

(b) 0 to 95% by weight of a comonomer capable of forming a solution of up to 10% by weight in water at 20° C, wherein (a) and (b) together form at least 90% by weight of the polymer and any remaining proportion is made up of water-soluble comonomers and the emulsion polymer has a $T_{\lambda max.}$ value of less than 100° C.

2. Emulsion polymer as claimed in claim 1, characterized in that it is in the form of an aqueous dispersion.

3. Emulsion polymer as claimed in claims 1 and 2, characterized in that the monomer component (b) consists of at least 20% by weight (based on the weight of the copolymer) of at least one alkyl ester of acrylic and/ormethacrylic acid with 1 to 4, preferably 1 to 3, carbon atoms in the alkyl group, vinyl actetate or propionate and/or lower vinyl ethers.

4. Emulsion polymer as claimed in claims 1 to 3, characterized by a molecular weight of at least 500,000.

5. Emulsion polymer as claimed in claims 1 to 4, characterized in that from 0.01 to 0.5% by weight of a cross-linking agent are involved in the synthesis thereof.

6. Use of an emulsion polymer as claimed in claims 1 to 5, as a thickener in an aqueous system with a pH of less than 7.

7. Use as a thickener as claimed in claim 6, characterized in that the ageous system is a plastics dispersion.

8. Use as a thickener as claimed in claim 7, characterized in that the plastics dispersion contains a plastics material which cross-links with itself under the effect of acid catalysts.

## Revendications

1. Produit de polymérisation en émulsion à effet épaississant, caractérisé en ce qu'il se compose de:

a) 5 à 100% en poids d'un ester 3-dialcoylamino-2,2-diméthylpropylique d'un acide carboxylique insaturé polmyérisable, les radicaux alcoyles contenant 1 à 4 atomes de carbone,

b) 0 à 95% en poids d'un comonomère soluble dans l'eau à raison de 10% en poids au maximum à 20° C,

a et b réunis constituant au moins 90% en poids du produit de polymérisation et la partie éventuellement restante étant formée de comonomères solubles dans l'eau, le produit de polymérisation en émulsion ayant une valeur $T_{\lambda max.}$ inférieure à 100° C.

2. Produit de polymérisation en émulsion selon la revendication 1, caractérisé en ce qu'il se présente sous la forme d'une dispersion aqueuse.

3. Produit de polymérisation en émulsion selon les revendications 1 et 2, caractérisé en ce que le constituant monomère b se compose, pour au moins 20% en poids (rapportés au poids du copolymère), d'au moins un ester alcoylique de l'acide acrylique et/ou méthacrylique contenant 1 à 4, de préférence 1 à 3 atomes de carbone dans le radical alcoyle, l'acétate ou le propionate de vinyle et/ou des éthers vinyliques inférieurs.

4. Produit de polymérisation en émulsion selon l'une quelconque des revendications 1 à 3, caractérisé par un poids moléculaire d'au moins 500 000.

5. Produit de polymérisation en émulsion selon l'une quelconque des revendications 1 à 4, caractérisé en ce que 0,01 à 0,5% en poids d'un agent de réticulation entrent dans sa composition.

6. Utilisation d'un produit de polymérisation en émulsion selon l'une quelconque des revendications 1 à 5, comme épaississant dans un système aqueux dont le pH a une valeur inférieure à 7.

7. Utilisation comme épaississant selon la revendication 6, caractérisée en ce que le système aqueux est une dispersion de matière synthétique.

8. Utilisation comme épaississant selon la revendication 7, caractérisée en ce que la dispersion de matière synthétique contient une matière synthétique autoréticulante sous l'action de catalyseurs acides.